# EUROPEAN PATENT APPLICATION

(11) **EP 3 385 100 A1**
(43) Date of publication of application: **10.10.2018**
(21) Application number: 16870331.2
(22) Date of filing: 20.10.2016
(51) Int. Cl.: B60H 1/32

(54) **ROOFTOP UNIT**

(30) Priority: 02.12.2015 JP 2015235907
(71) Applicant: Denso Corporation, Kariya-shi, Aichi-ken 448-8661 (JP)
(72) Inventor: MIDORIKAWA, Maro, Kariya-city Aichi 448-8661 (JP); KURATA, Takehiro, Kariya-city Aichi 448-8661 (JP)
(74) Representative: TBK
(86) International application number: PCT/JP2016/081097
(87) International publication number: WO 2017/094391

(57) **Abstract**

A roof installation unit to be disposed in a roof of a vehicle includes a plurality of exterior heat exchangers (16, 18, 19, 15A, 15B), a front-side opening formation portion (122), and a blower (131). The plurality of exterior heat exchangers are arranged in a vehicle traveling direction and configured to cool a refrigerant by heat exchange between the refrigerant and outside air. The front-side opening formation portion is disposed on a front side in the vehicle traveling direction with respect to the plurality of exterior heat exchangers. The front-side opening formation portion forms a front side opening (122a) through which the outside air is taken in from the front side in the vehicle traveling direction. The blower is disposed on an upper side in a vertical direction of a foremost exterior heat exchanger (15A, 16) located on a foremost side in the vehicle traveling direction. The blower generates a flow of outside air such that the outside air taken in via the front side opening passes through the foremost exterior heat exchanger, and the outside air having passed through the foremost exterior heat exchanger is drawn into the blower. A front side in the vehicle traveling direction of the foremost exterior heat exchanger is located on an upper side in the vertical direction with respect to a rear side in the vehicle traveling direction of the foremost exterior heat exchanger, and the foremost exterior heat exchanger is inclined with respect to the vehicle traveling direction.

## Description

### CROSS REFERENCE TO RELATED APPLICATION

This application is based on Japanese Patent Application No. 2015-235907 filed on December 2, 2015, the contents of which are incorporated herein by reference in its entirety.

### FIELD OF THE INVENTION

The present disclosure relates to a roof installation unit that includes an exterior heat exchanger disposed in a roof of a vehicle.

### BACKGROUND ART

A roof installation unit for an air conditioner, which is installed on the roof of a vehicle, such as a bus, has hitherto required a large-sized exterior heat exchanger for its use. In order to easily take in the traveling air, a front layout or a center layout is proposed as the layout of the exterior heat exchanger.

The front layout is a layout in which the exterior heat exchanger is arranged on the front side in a vehicle traveling direction. The center layout is a layout in which the exterior heat exchanger is arranged at the center in the vehicle traveling direction and also at the center in the vehicle width direction.

In some recent markets, the exterior heat exchanger often needs to be arranged based on the center layout due to the demand for appearance design or the necessity for similar design.

For example, Patent Document 1 proposes a roof installation unit in which one exterior heat exchanger is disposed on the roof so that its air inflow surface is located on a lower side in the vertical direction with respect to its outflow surface, and an electric fan is disposed on an upper side in the vertical direction of one exterior heat exchanger, together with an operation of the electric fan.

The roof installation unit is configured such that the outside air taken therein through a front side opening and a rear side opening, provided at a front end and a rear end of the exterior heat exchanger, respectively, passes through the exterior heat exchanger.

### [Related Art Document]

### [Patent Document]

Patent Document 1: International Patent Publication No. WO 2011/063916

### SUMMARY OF INVENTION

In the roof installation unit of the above-mentioned Patent Document 1, in order to improve its air conditioning capability, a sufficient volume of air needs to pass through the exterior heat exchanger.

The volume of air passing through the exterior heat exchanger is significantly affected by an opening area of the front side opening and an opening area of the rear side opening. Thus, these opening areas of the front side opening and the rear side opening must be as large as possible.

The opening area of the front side opening is an area defined by a formula of (L1 x W) where L1 is an interval between the front side in the vehicle traveling direction of the exterior heat exchanger and the roof, and W is a dimension in the vehicle width direction of the exterior heat exchanger. The opening area of the rear side opening is an area defined by a formula of (L2 x W) where L2 is an interval between the rear side in the vehicle traveling direction of the exterior heat exchanger and the roof.

In the roof installation unit, when one exterior heat exchanger is arranged to be inclined with respect to the vehicle traveling direction as viewed from the vehicle width direction, the opening area of the front side opening can be made large, as compared with the case in which one exterior heat exchanger is arranged in parallel with the vehicle traveling direction.

However, the dimension in the vertical direction of the roof installation unit with the roof surface as the reference is determined depending on the specifications of the vehicle. Therefore, the interval between the roof surface and the electric fan is limited by the specifications of the vehicle.

The electric fan and the exterior heat exchanger are required not to be in contact with each other in terms of the design. Therefore, when one exterior heat exchanger is disposed between a roof surface and the electric fan while being inclined with respect to the vehicle traveling direction, an inclination angle of one exterior heat exchanger with respect to the vehicle traveling direction is limited by the specifications of the vehicle. For this reason, the opening area of the front side opening cannot be made large enough in some cases. Consequently, a sufficient volume of air cannot sometimes pass through the exterior heat exchanger.

The present disclosure has been made in view of the foregoing matter, and it is an object of the present disclosure to provide a roof installation unit which increases the volume of air passing through an exterior heat exchanger.

According to an aspect of the present disclosure, a roof installation unit that is to be disposed in a roof of a vehicle includes: a plurality of exterior heat exchangers that configures a refrigeration cycle in which a refrigerant circulates, the exterior heat exchangers being respectively arranged in a vehicle traveling direction, each of the exterior heat exchangers being configured to cool the refrigerant by heat exchange between the refrigerant and outside air; a front-side opening formation portion disposed on a front side in the vehicle traveling direction with respect to the plurality of exterior heat exchangers, the front-side opening formation portion being configured to form a front side opening through which the outside air is taken in from the front side in the vehicle traveling direction; and a blower disposed on an upper side in a vertical direction of a foremost exterior heat exchanger located on a foremost side in the vehicle traveling direction among the plurality of exterior heat exchangers. The blower is configured to generate a flow of outside air such that the outside air taken in via the front side opening passes through the foremost exterior heat exchanger, and the outside air having passed through the foremost exterior heat exchanger is drawn into the blower. Furthermore, a front side in the vehicle traveling direction of the foremost exterior heat exchanger is located on an upper side in the vertical direction with respect to a rear side in the vehicle traveling direction of the foremost exterior heat exchanger, and the foremost exterior heat exchanger is inclined with respect to the vehicle traveling direction.

According to this aspect, the plurality of exterior heat exchangers respectively arranged in the vehicle traveling direction are adopted in place of one exterior heat exchanger described in the above-mentioned Patent Document 1. Thus, the dimension in the vehicle traveling direction of the foremost exterior heat exchanger can be made smaller than the dimension in the vehicle traveling direction of the one exterior heat exchanger described in the above-mentioned Patent Document 1. Consequently, the inclination angle of the foremost exterior heat exchanger can be made larger than the inclination angle of one exterior heat exchanger in the case where the one exterior heat exchanger is inclined with respect to the vehicle traveling direction in the technique of Patent Document 1. Therefore, the distance (L1) in the vertical direction between the roof of the vehicle and the front side in the vehicle traveling direction of the foremost exterior heat exchanger can be further increased. Thus, as the opening area of the front side opening can be further enlarged, the volume of air passing through the foremost exterior heat exchanger can be increased.

As mentioned above, the roof installation unit can be provided which increases the volume of air passing through the exterior heat exchangers.

### BRIEF DESCRIPTION OF THE DRAWINGS

FIG. 1 is a block diagram showing a schematic structure of a vehicle air conditioner in a first embodiment;
FIG. 2 is a diagram showing a structure of a single first exterior heat exchanger in the first embodiment;
FIG. 3 is a perspective view showing an appearance of the roof installation unit shown in FIG. 1;
FIG. 4 is a schematic diagram of an inside of the roof installation unit shown in FIG. 3, as viewed from the vehicle width direction;
FIG. 5 is a cross-sectional view of the electric fan, a second exterior heat exchanger, a duct, and the like within the roof installation unit shown in FIG. 3, taken at a cross section perpendicular to the vehicle traveling direction;
FIG. 6 is a schematic diagram of an inside of a roof installation unit as a comparative example, as viewed from the vehicle width direction;
FIG. 7 is a schematic diagram of an inside of the roof installation unit, as viewed from the vehicle width direction in the second embodiment; and
FIG. 8 is a schematic diagram showing a structure of a refrigeration cycle device in the roof installation unit of the second embodiment.

### DESCRIPTION OF EMBODIMENTS

Hereinafter, embodiments of the present disclosure will be described with reference to the accompanying drawings. In the following embodiments, parts that are the same or equivalent to each other are denoted by the same reference numerals in the drawings in order to simplify the description.

### (First Embodiment)

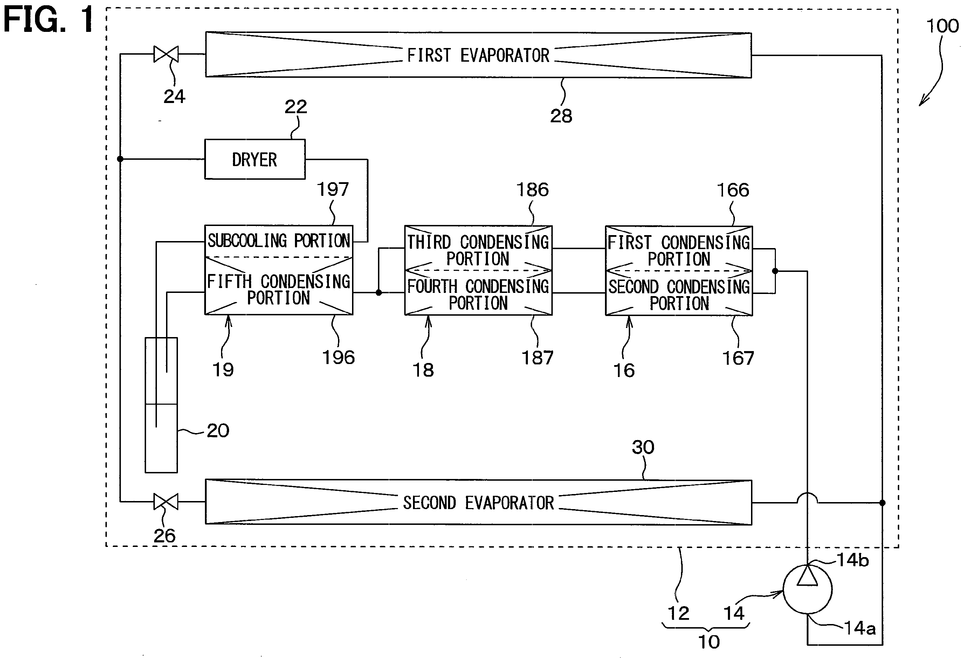

FIG. 1 is a structural diagram showing a structure of a vehicle air conditioner 100 in a first embodiment. The vehicle air conditioner 100 is mounted on vehicles, such as buses. The vehicle air conditioner 100 performs air-conditioning of the vehicle interior. A refrigeration cycle device 10 in the vehicle air conditioner 100 configures a vapor compression refrigeration cycle in which a refrigerant circulates to repeatedly perform heat absorption and heat dissipation. The refrigeration cycle device 10 cools air to be blown into the vehicle interior by using the refrigerant. The vehicle air conditioner 100 includes, in addition to the refrigeration cycle device 10, for example, a heater core, a blower, a blower duct, and the like that use a coolant for a traveling engine as a heat source, which are not shown.

Specifically, the refrigeration cycle device 10 includes a roof installation unit 12 disposed in a roof 9 of the vehicle, and a compressor 14 disposed under a rear floor of the vehicle, for example.

The roof installation unit 12 includes a first exterior heat exchanger 16, a second exterior heat exchanger 18, a third exterior heat exchanger 19, a receiver 20, a dryer 22, a first decompression device 24, a second decompression device 26, a first evaporator 28, and a second evaporator 30. The third exterior heat exchanger 19 has a fifth condensing portion 196 and a subcooling portion 197.

In a refrigerant circuit of the refrigeration cycle device 10, the refrigerant discharged from the compressor 14 flows from the compressor 14 to the first exterior heat exchanger 16, the second exterior heat exchanger 18, the fifth condensing portion 196, the receiver 20, the subcooling portion 197, and the dryer 22 in this order. Then, the refrigerant is divided into two refrigerant paths located downstream of the dryer 22. Subsequently, in one of the two refrigerant paths, part of the refrigerant flowing out of the dryer 22 flows through the first decompression device 24, the first evaporator 28, and the compressor 14 in this order, while in the other path, the remaining part of the refrigerant flows through the second decompression device 26, the second evaporator 30, and the compressor 14 in this order.

The compressor 14 has a refrigerant suction port 14a and a refrigerant discharge port 14b. The compressor 14 compresses a refrigerant sucked from the refrigerant suction port 14a, and discharges the compressed refrigerant from the refrigerant discharge port 14b. For example, the compressor 14 is driven from a traveling engine (not shown) via an electromagnetic clutch.

The first, second, and third exterior heat exchangers 16, 18, and 19 are disposed on the roof 9 at the center side in the vehicle traveling direction and also at the center side in the vehicle width direction.

The first exterior heat exchanger 16 is a condensing portion that condenses the refrigerant, compressed by the compressor 14, through heat exchange between the refrigerant and the outside air. The outside air that is heat-exchanged with the refrigerant is air outside a vehicle cabin, specifically, air including traveling air blown thereinto from the front of the vehicle. That is, the first exterior heat exchanger 16 is an exterior heat exchanger that exchanges heat between the air outside the vehicle cabin and the refrigerant.

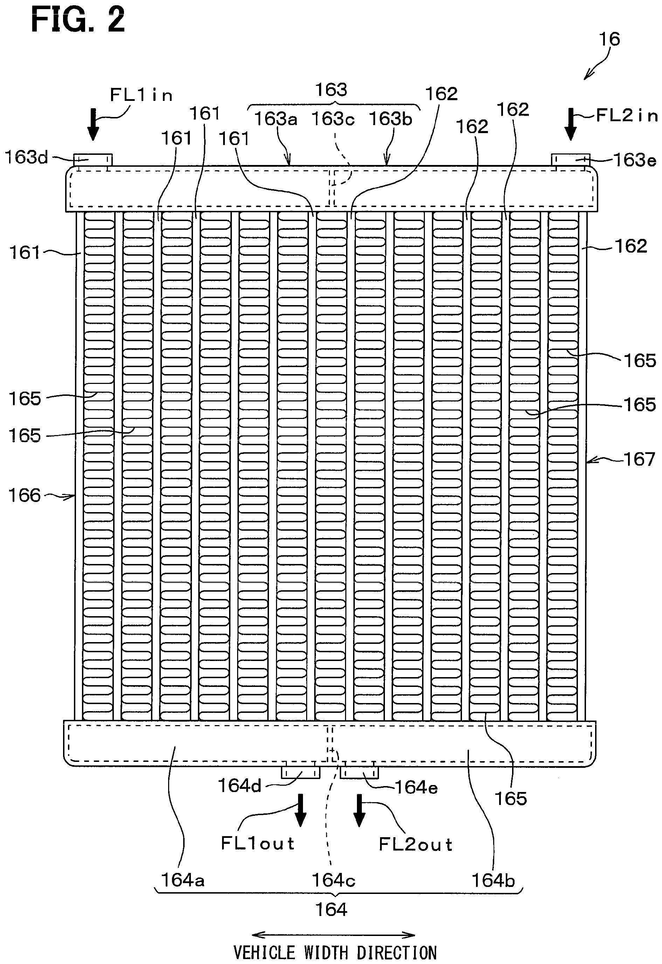

The first exterior heat exchanger 16 is a multi-flow heat exchanger and configured as illustrated in FIG. 2. FIG. 2 is a diagram showing the structure of the single first exterior heat exchanger 16.

As shown in FIG. 2, the first exterior heat exchanger 16 includes a plurality of first refrigerant tubes 161, a plurality of second refrigerant tubes 162, an inlet side header tank 163, an outlet side header tank 164, and a plurality of fins 165. The inlet side header tank 163 includes a first inlet side tank portion 163a and a second inlet side tank portion 163b. The outlet side header tank 164 includes a first outlet side tank portion 164a and a second outlet side tank portion 164b.

The first refrigerant tubes 161 and the second refrigerant tubes 162 of the first exterior heat exchanger 16 are the same except for the connection destination, and are configured to allow the refrigerant to flow through the insides of the refrigerant tubes 161 and 162, respectively.

The first refrigerant tubes 161 are stacked and arranged in one direction, i.e., in the tube stacking direction at intervals, through which the outside air passes, and cause the refrigerant to flow while exchanging heat with the outside air. Likewise, the second refrigerant tubes 162 are stacked and arranged in the tube stacking direction at intervals, through which the outside air passes, and cause the refrigerant to flow while exchanging heat with the outside air.

The first exterior heat exchanger 16 is disposed on the roof 9 of the vehicle such that all the first refrigerant tubes 161 are arranged in one vehicle width direction with respect to all the second refrigerant tubes 162.

In the present embodiment, the tube stacking direction is aligned with the vehicle width direction. The longitudinal direction of each of the refrigerant tubes 161 and 162 is aligned with the vehicle traveling direction.

The inlet side header tank 163 has a separator 163c serving as a partition plate that divides an internal space of the inlet side header tank 163 into two tank portions. The first inlet side tank portion 163a is one of the two tank portions divided by the separator 163c, while the second inlet side tank portion 163b is the other tank portion divided by the separator 163c.

The outlet side header tank 164 is also divided in the same manner as the inlet side header tank 163. That is, the outlet side header tank 164 has a separator 164c that divides an internal space of the outlet side header tank 164 into two tank portions. The first outlet side tank portion 164a is one of the tank portions divided by the separator 164c, while the second outlet side tank portion 164b is the other tank portion divided by the separator 164c.

Here, the first inlet side tank portion 163a and the first outlet side tank portion 164a are paired. The first inlet side tank portion 163a and the first outlet side tank portion 164a correspond to the plurality of first refrigerant tubes 161 among the plurality of first refrigerant tubes 161 and the plurality of second refrigerant tubes 162. Thus, the first inlet side tank portion 163a is connected to one end of each of the plurality of first refrigerant tubes 161, while the first outlet side tank portion 164a is connected to the other end of each of the plurality of first refrigerant tubes 161.

The second inlet side tank portion 163b and the second outlet side tank portion 164b are paired. The second inlet side tank portion 163b and the second outlet side tank portion 164b correspond to the plurality of second refrigerant tubes 162 among the plurality of first refrigerant tubes 161 and the plurality of second refrigerant tubes 162. Thus, the second inlet side tank portion 163b is connected to one end of each of the plurality of second refrigerant tubes 162, while the second outlet side tank portion 164b is connected to the other end of each of the plurality of second refrigerant tubes 162.

A first refrigerant inlet 163d is formed in the first inlet side tank portion 163a. A second refrigerant inlet 163e is formed in the second inlet side tank portion 163b. A first refrigerant outlet 164d for allowing refrigerant to flow out of the first outlet side tank portion 164a is formed in the first outlet side tank portion 164a. A second refrigerant outlet 164e for allowing refrigerant to flow out from the second outlet side tank portion 164b is formed in the second outlet side tank portion 164b.

The first refrigerant inlet 163d and the second refrigerant inlet 163e are provided in parallel with each other in the refrigerant flow in the first exterior heat exchanger 16. That is, the refrigerant compressed by the compressor 14 shown in FIG. 1 flows into the first inlet side tank portion 163a from the first refrigerant inlet 163d as indicated by the arrow FL1in shown in FIG. 2. The first inlet side tank portion 163a respectively distributes and causes the refrigerant flowing thereinto to flow to the respective plurality of first refrigerant tubes 161. Together with this, the refrigerant compressed by the compressor 14 flows into the second inlet side tank portion 163b from the second refrigerant inlet 163e as indicated by the arrow FL2in shown in FIG. 2. The second inlet side tank portion 163b respectively distributes and causes the refrigerant flowing thereinto to flow to the respective plurality of second refrigerant tubes 162.

The first refrigerant outlet 164d and the second refrigerant outlet 164e are also provided in parallel with each other with respect to the refrigerant flow in the first exterior heat exchanger 16. The first outlet side tank portion 164a collects the refrigerants flowing thereinto from the respective plurality of first refrigerant tubes 161. Together with this, the first outlet side tank portion 164a flows the refrigerant from the first refrigerant outlet 164d to the subcooling portion 197 of the second exterior heat exchanger 18 through a third condensing portion 186 of the second exterior heat exchanger 18, the fifth condensing portion 196 of the third exterior heat exchanger 19, and the receiver 20. The arrow FL1out shown in FIG. 2 indicates the flow of the refrigerant flowing from the first outlet side tank portion 164a.

The second outlet side tank portion 164b collects the refrigerants flowing thereinto from the respective plurality of second refrigerant tubes 162. Together with this, the second outlet side tank portion 164b flows the refrigerant from the second refrigerant outlet 164e to the subcooling portion 197 of the second exterior heat exchanger 18 through a fourth condensing portion 187 of the second exterior heat exchanger 18, the fifth condensing portion 196 of the third exterior heat exchanger 19, and the receiver 20.

The fins 165 are interposed between the refrigerant tubes 161 and 162, and are joined to the adjacent refrigerant tubes 161 and 162 by brazing or the like. Thus, the fins 165 promote heat exchange between the outside air and the refrigerant flowing through the inside of each of the refrigerant tubes 161 and 162.

Such a first exterior heat exchanger 16 configures a first condensing portion 166 and a second condensing portion 167, which serve to condense the refrigerant. The first condensing portion 166 is configured by the plurality of first refrigerant tubes 161, the first inlet side tank portion 163a, and the first outlet side tank portion 164a. The second condensing portion 167 is configured by the plurality of second refrigerant tubes 162, the second inlet side tank portion 163b, and the second outlet side tank portion 164a.

The inlet side header tank 163 is located on the front side in the vehicle traveling direction of the first exterior heat exchanger 16. The outlet side header tank 164 is located on the rear side in the vehicle traveling direction of the first exterior heat exchanger 16. The inlet side header tank 163 is located on the upper side in the vertical direction with respect to the outlet side header tank 164, so that the first exterior heat exchanger 16 is inclined with respect to the vehicle traveling direction.

The second exterior heat exchanger 18 is the same as the first exterior heat exchanger 16 described above in that the heat of the refrigerant compressed by the compressor 14 is dissipated into the outside air. That is, the second exterior heat exchanger 18 is also an exterior heat exchanger that exchanges heat between the air outside the vehicle cabin and the refrigerant. The second exterior heat exchanger 18 is provided on the downstream side of the refrigerant flow with respect to the first exterior heat exchanger 16.

The second exterior heat exchanger 18 is, for example, a multi-flow heat exchanger. Like the first exterior heat exchanger 16, the second exterior heat exchanger 18 has the third condensing portion 186 and the fourth condensing portion 187 independent of each other with respect to the refrigerant flow by dividing the internal spaces of the inlet side header tank and the outlet side header tank by separators.

The third condensing portion 186 of the second exterior heat exchanger 18 is connected in series with the first condensing portion 166 of the first exterior heat exchanger 16 with respect to the refrigerant flow from the compressor 14 to the first evaporator 28 or the second evaporator 30. The third condensing portion 186 is provided on the downstream side with respect to the first condensing portion 166 of the first exterior heat exchanger 16.

Therefore, the refrigerant compressed by the compressor 14 flows into the third condensing portion 186 through the first condensing portion 166 of the first exterior heat exchanger 16. Then, the third condensing portion 186 condenses the refrigerant flowing thereinto by performing heat exchange between the refrigerant and the outside air. The third condensing portion 186 causes the heat-exchanged refrigerant to flow out to the receiver 20 through the fifth condensing portion 196 of the third exterior heat exchanger 19.

The fourth condensing portion 187 of the second exterior heat exchanger 18 is connected in series with the second condensing portion 167 of the first exterior heat exchanger 16 in the refrigerant flow from the compressor 14 to the first evaporator 28 or the second evaporator 30. The fourth condensing portion 187 is provided on the downstream side with respect to the second condensing portion 167 of the first exterior heat exchanger 16.

Therefore, the refrigerant compressed by the compressor 14 flows into the fourth condensing portion 187 through the second condensing portion 167 of the first exterior heat exchanger 16. Then, the fourth condensing portion 187 condenses the refrigerant flowing thereinto by performing heat exchange between the refrigerant and the outside air. The fourth condensing portion 187 causes the heat-exchanged refrigerant to flow out to the receiver 20 through the fifth condensing portion 196 of the third exterior heat exchanger 19.

The inlet side header tank of the second exterior heat exchanger 18 is located on the front side in the vehicle traveling direction of the second exterior heat exchanger 18. The outlet side header tank of the second exterior heat exchanger 18 is located on the rear side in the vehicle traveling direction of the second exterior heat exchanger 18. The outlet side header tank and the inlet side header tank are located at the same height in the vertical direction, so that the second exterior heat exchanger 18 is disposed in parallel with the vehicle traveling direction.

The third exterior heat exchanger 19 is the same as the first and second exterior heat exchangers 16 and 18 described above in that the heat of the refrigerant compressed by the compressor 14 is dissipated into the outside air. That is, the third exterior heat exchanger 19 is also an exterior heat exchanger that exchanges heat between the air outside the vehicle cabin and the refrigerant.

The third exterior heat exchanger 19 is provided on the downstream side of the refrigerant flow with respect to the first and second exterior heat exchangers 16 and 18. Like the first and second exterior heat exchangers 16 and 18, the third exterior heat exchanger 19 is, for example, a multi-flow heat exchanger and has the fifth condensing portion 196 and the subcooling portion 197 independent of each other in the refrigerant flow by dividing the internal spaces of the inlet side header tank and the outlet side header tank by separators.

The fifth condensing portion 196 of the third exterior heat exchanger 19 is connected in series with the third condensing portion 186 in the refrigerant flow from the compressor 14 to the first evaporator 28 or the second evaporator 30. The fifth condensing portion 196 is provided on the downstream side with respect to the third condensing portion 186. The fifth condensing portion 196 is connected in series with the fourth condensing portion 187 in the refrigerant flow from the compressor 14 to the first evaporator 28 or the second evaporator 30. The fifth condensing portion 196 is provided on the downstream side with respect to the fourth condensing portion 187. Therefore, the refrigerant compressed by the compressor 14 flows into the fifth condensing portion 196 through the first condensing portion 166 and the third condensing portion 186. The refrigerant compressed by the compressor 14 flows into the fifth condensing portion 196 through the second condensing portion 167 and the fourth condensing portion 187. Then, the fifth condensing portion 196 condenses the refrigerant flowing thereinto by performing heat exchange between the refrigerant and the outside air. The fifth condensing portion 196 causes the heat-exchanged refrigerant to flow out to the receiver 20.

The inlet side header tank of the third exterior heat exchanger 19 is located on the front side in the vehicle traveling direction of the third exterior heat exchanger 19. The outlet side header tank of the third exterior heat exchanger 19 is located on the rear side in the vehicle traveling direction of the third exterior heat exchanger 19. The outlet side header tank is located on the upper side in the vertical direction with respect to the inlet side header tank, so that the third exterior heat exchanger 19 is inclined with respect to the vehicle traveling direction.

The receiver 20 is a gas-liquid separator that separates the refrigerant flowing thereinto from the fifth condensing portion 196 of the third exterior heat exchanger 19, into a liquid-phase refrigerant and a gas-phase refrigerant, and causes the separated liquid-phase refrigerant to flow out to the subcooling portion 197 of the third exterior heat exchanger 19. The receiver 20 adjusts the amount of refrigerant circulating in the refrigeration cycle by storing a predetermined amount of refrigerant in the receiver.

The liquid-phase refrigerant condensed by the first exterior heat exchanger 16, the second exterior heat exchanger 18, and the fifth condensing portion 196, that is, the liquid-phase refrigerant from the receiver 20 flows into the subcooling portion 197 of the third exterior heat exchanger 19. The subcooling portion 197 cools the liquid-phase refrigerant flowing thereinto by performing heat exchange between the liquid-phase refrigerant and the outside air. The subcooling portion 197 causes the cooled liquid-phase refrigerant to flow out to the dryer 22.

The dryer 22 contains a desiccant, such as silica gel, which absorbs moisture contained in the liquid-phase refrigerant flowing thereinto from the subcooling portion 197 of the third exterior heat exchanger 19. The dryer 22 causes the liquid-phase refrigerant to flow out to the first decompression device 24 and the second decompression device 26, respectively.

Each of the first decompression device 24 and the second decompression device 26 is a temperature type expansion valve used in a general vehicle air conditioner. The first decompression device 24 decompresses the refrigerant flowing thereinto from the dryer 22 and causes the decompressed refrigerant to flow to the first evaporator 28. At the same time, the second decompression device 26 decompresses the refrigerant flowing thereinto from the dryer 22 and causes the decompressed refrigerant to flow to the second evaporator 30.

The refrigerant decompressed by the first decompression device 24 flows into the first evaporator 28. The first evaporator 28 cools ventilation air while evaporating the decompressed refrigerant by the heat exchange between the decompressed refrigerant and the ventilation air to be blown into the vehicle interior. In short, the first evaporator 28 is an interior heat exchanger that cools the ventilation air to be blown into the vehicle interior.

The second evaporator 30 is also an interior heat exchanger that operates in the same manner as the first evaporator 28 described above. That is, the refrigerant decompressed by the second decompression device 26 flows into the second evaporator 30. Then, the second evaporator 30 cools the ventilation air while evaporating the decompressed refrigerant by heat exchange between the decompressed refrigerant and the ventilation air to be blown into the vehicle interior.

The refrigerant after the heat exchange, flowing out of the first evaporator 28, and the refrigerant after the heat exchange, flowing out of the second evaporator 30, are drawn into the refrigerant suction port 14a of the compressor 14.

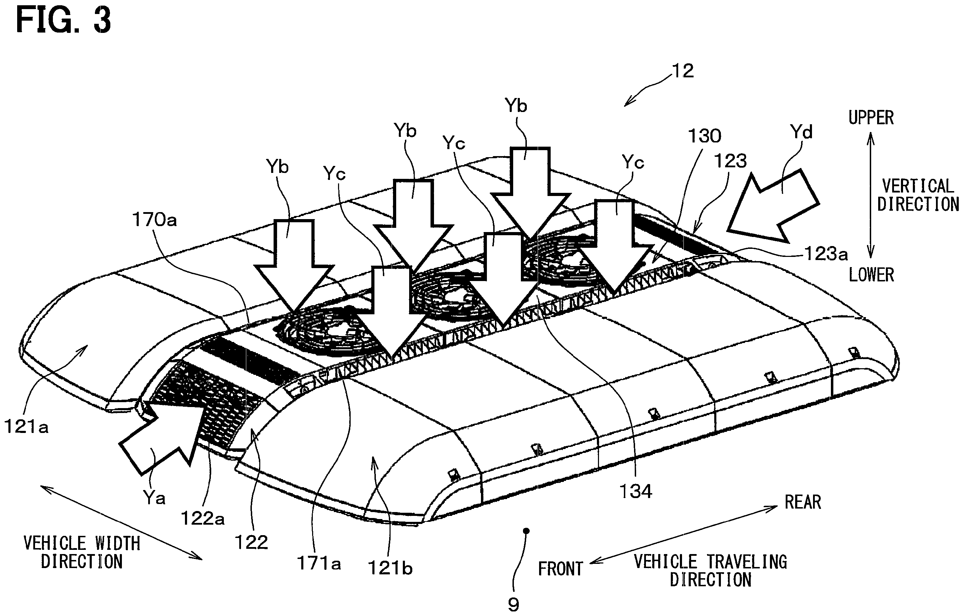

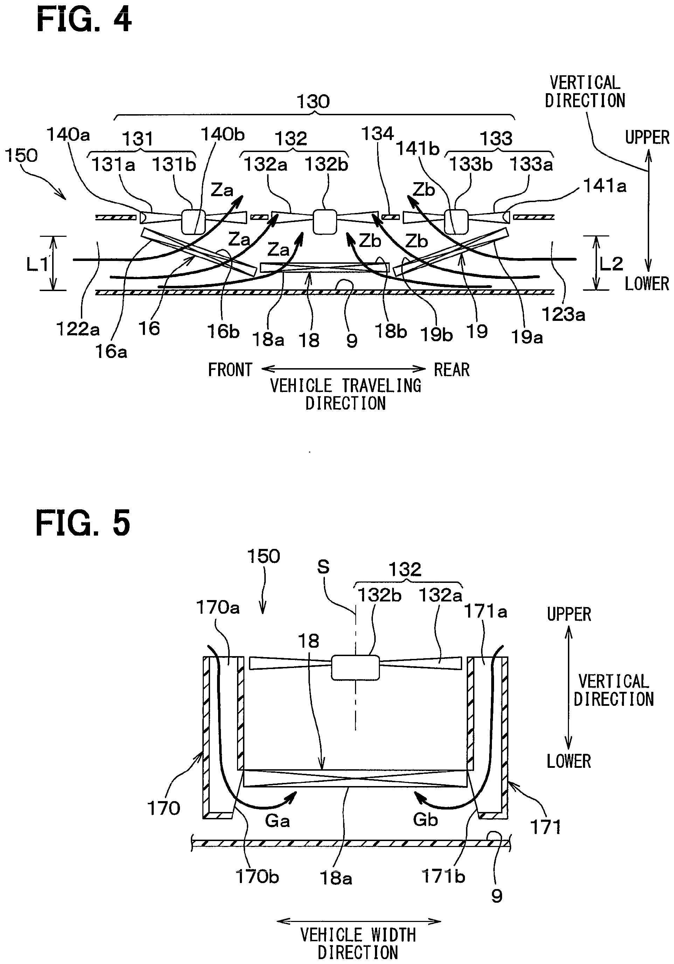

Next, a specific structure of the roof installation unit 12 in the present embodiment will be described with reference to FIGS. 3, 4, and 5. FIG. 3 is a perspective view showing an appearance of the roof installation unit 12. FIG. 4 is a schematic view of the inside of the roof installation unit 12 as viewed from the vehicle width direction. FIG. 5 is a cross-sectional view of an electric fan 132, a second exterior heat exchanger 18, a duct 170, and the like in the roof installation unit 12, taken along the cross section perpendicular to the vehicle traveling direction.

The roof installation unit 12 is disposed in the center in the vehicle width direction of the roof 9 of the vehicle and also at the center in the vehicle traveling direction thereof. As shown in FIG. 3, the roof installation unit 12 includes unit cases 121a and 121b, covers 122 and 123, and a blowing unit 130.

The unit cases 121a and 121b are disposed with a spacing therebetween in the vehicle width direction. The unit cases 121a and 121b accommodate therein the receiver 20, the dryer 22, the first decompression device 24, the second decompression device 26, the first evaporator 28, and the second evaporator 30.

The blowing unit 130 is disposed between the unit cases 121a and 121b. As shown in FIG. 4, the blowing unit 130 is disposed on the upper side in the vertical direction with respect to the first exterior heat exchanger 16, the second exterior heat exchanger 18, and the third exterior heat exchanger 19.

The first exterior heat exchanger 16 is located on the foremost side in the vehicle traveling direction among the first, second, and third exterior heat exchangers 16, 18, and 19. The third exterior heat exchanger 19 is located on the rearmost side in the vehicle traveling direction among the first, second, and third exterior heat exchangers 16, 18, and 19. The second exterior heat exchanger 18 is disposed between the first exterior heat exchanger 16 and the third exterior heat exchanger 19.

The first exterior heat exchanger 16 is provided with an air inflow surface 16a and an air outflow surface 16b. The air inflow surface 16a serves as an air inflow portion which the outside air enters in the first exterior heat exchanger 16, and is formed to spread in a planar shape in a direction that intersects the thickness direction of the first exterior heat exchanger 16. The air outflow surface 16b serves as an air outflow portion from which the outside air is discharged in the first exterior heat exchanger 16, and is formed to spread in a planar shape in a direction that intersects the thickness direction of the first exterior heat exchanger 16. In the first exterior heat exchanger 16, the air inflow surface 16a is disposed on the lower side in the vertical direction with respect to the air outflow surface 16b.

The inlet side header tank 163 is located on the upper side in the vertical direction with respect to the outlet side header tank 164, as mentioned above. Thus, the front side in the vehicle traveling direction of the first exterior heat exchanger 16 is located on the upper side in the vertical direction with respect to the rear side in the vehicle traveling direction of the first exterior heat exchanger 16. With this configuration, the first exterior heat exchanger 16 is inclined with respect to the vehicle traveling direction. Consequently, the plurality of first refrigerant tubes 161 and the plurality of second refrigerant tubes 162 are inclined with respect to the vehicle traveling direction. Therefore, the air inflow surface 16a is inclined with respect to the vehicle traveling direction.

The second exterior heat exchanger 18 is provided with an air inflow surface 18a and an air outflow surface 18b. The air inflow surface 18a serves as an air inflow portion which the outside air enters in the second exterior heat exchanger 18, and is formed to spread in a planar shape in a direction that intersects the thickness direction of the second exterior heat exchanger 18. The air outflow surface 18b serves as an air outflow portion from which the outside air is discharged in the second exterior heat exchanger 18, and is formed to spread in a planar shape in a direction that intersects the thickness direction of the second exterior heat exchanger 18. In the second exterior heat exchanger 18, the air inflow surface 18a is disposed on the lower side in the vertical direction with respect to the air outflow surface 18b.

The second exterior heat exchanger 18 is disposed in parallel with the vehicle traveling direction, as mentioned above. Thus, the air inflow surface 18a and the air outflow surface 18b are respectively disposed in parallel with the vehicle traveling direction.

The third exterior heat exchanger 19 is provided with an air inflow surface 19a and an air outflow surface 19b. The air inflow surface 19a serves as an air inflow portion which the outside air enters in the third exterior heat exchanger 19, and is formed to spread in a planar shape in a direction that intersects the thickness direction of the third exterior heat exchanger 19. The air outflow surface 19b serves as an air outflow portion from which the outside air is discharged in the third exterior heat exchanger 19, and is formed to spread in a planar shape in a direction that intersects the thickness direction of the third exterior heat exchanger 19. In the third exterior heat exchanger 19, the air inflow surface 19a is disposed on the lower side in the vertical direction with respect to the air outflow surface 19b.

In the third exterior heat exchanger 19, the outlet side header tank is located on the upper side in the vertical direction with respect to the inlet side header tank. Thus, the rear side in the vehicle traveling direction of the third exterior heat exchanger 19 is located on the upper side in the vertical direction with respect to the front side in the vehicle traveling direction of the third exterior heat exchanger 19. With this configuration, the third exterior heat exchanger 19 is inclined with respect to the vehicle traveling direction. Consequently, the plurality of first refrigerant tubes and the plurality of second refrigerant tubes, which configure the third exterior heat exchanger 19, are inclined with respect to the vehicle traveling direction. Therefore, the air inflow surface 19a is inclined with respect to the vehicle traveling direction.

The blowing unit 130 includes electric fans 131, 132, and 133, and a shroud 134.

The electric fan 131 is located on the upper side in the vertical direction with respect to the first exterior heat exchanger 16. The electric fan 131 includes a fan 131a and an electric motor 131b that rotatably drives the fan 131a. The electric fan 131 corresponds to a first blower.

In the present embodiment, the electric motor 131b is formed to protrude downward in the vertical direction with respect to the fan 131a.

The fan 131a is formed to have its axis extending in the vertical direction. The fan 131a rotates about its axis. The electric motor 131b is disposed on the axis side of the fan 131a. A lowermost portion 140b of the electric motor 131b, which is located on the lowest side in the vertical direction, is located on the lower side in the vertical direction with respect to a lowermost portion 140a of the fan 131a, which is located on the lowest side in the vertical direction. Thus, the lowermost portion 140b of the electric motor 131b configures the lowermost portion of the electric fan 131. The lowermost portion 140b of the electric motor 131b is located on the lower side in the vertical direction with respect to the front side in the vehicle traveling direction (for example, front end in the vehicle traveling direction) of the air outflow surface 16b of the first exterior heat exchanger 16. The fan 131a corresponds to the first fan. The electric motor 131b corresponds to the first electric motor.

The electric fan 133 includes a fan 133a and an electric motor 133b that rotatably drives the fan 133a. The electric fan 133 is located on the upper side in the vertical direction with respect to the third exterior heat exchanger 19. The electric fan 133 corresponds to a second blower. The electric motor 133b corresponds to the second electric motor.

In the present embodiment, the electric motor 133b is formed to protrude downward in the vertical direction with respect to the fan 133a.

The fan 133a is formed to have its axis extending in the vertical direction. The fan 133a rotates about its axis. The electric motor 133b is disposed on the axis side of the fan 133a. A lowermost portion 141b of the electric motor 133b, which is located on the lowest side in the vertical direction, is located on the lower side in the vertical direction with respect to a lowermost portion 141a of the fan 133a, which is located on the lowest side in the vertical direction. Thus, the lowermost portion 141b of the electric motor 133b configures the lowermost portion of the electric fan 133. The fan 133a corresponds to the second fan.

The lowermost portion 141b of the electric motor 133b is located on the lower side in the vertical direction with respect to the rear side in the vehicle traveling direction (for example, rear end in the vehicle travelling direction) of the air outflow surface 19b of the third exterior heat exchanger 19.

The electric fan 132 is configured in the same manner as each of the electric fans 131 and 133. The electric fan 132 includes a fan 132a and an electric motor 132b that rotatably drives the fan 132a. The electric fan 132 is located on the upper side in the vertical direction with respect to the second exterior heat exchanger 18.

In the present embodiment, the electric motor 132b is formed to protrude downward in the vertical direction with respect to the fan 132a.

The fan 132a is formed to have its axis extending in the vertical direction. As shown in FIG. 5, the fan 132a rotates about its axis S. The electric motor 132b is disposed on the axis side of the fan 132a.

An axial fan is used for each of the fans 131a, 132a, and 133a. Thus, the fans 131a, 132a, and 133a rotate about their respective axes, thereby drawing the outside air from the lower side in the vertical direction to blowout the outside air toward the upper side in the vertical direction.

The shroud 134 is a casing that is formed to enclose the fans 131a, 132a, and 133a from the horizontal direction while covering the first exterior heat exchanger 16, the second exterior heat exchanger 18, and the third exterior heat exchanger 19 from the upper side in the vertical direction.

The cover 122 is disposed on the front side in the vehicle traveling direction with respect to the electric fans 131, 132, and 133 and between the unit cases 121a and 121b. The cover 122 forms a front side opening 122a that opens toward the front side in the vehicle traveling direction. The cover 122 is disposed to be inclined with respect to the vehicle traveling direction such that the cover is directed upward in the vertical direction toward the rear side in the vehicle traveling direction. The cover 122 corresponds to a front-side opening formation portion.

The cover 123 is disposed on the rear side in the vehicle traveling direction with respect to the electric fans 131, 132, and 133 and between the unit cases 121a and 121b. The cover 123 forms a rear side opening 123a that opens toward the rear side in the vehicle traveling direction. The cover 123 is disposed to be inclined with respect to the vehicle traveling direction such that the cover is directed upward in the vertical direction toward the front side in the vehicle traveling direction. The cover 123 corresponds to a rear-side opening formation portion.

The duct 170 is disposed between the unit case 121a and the blowing unit 130 as shown in FIG. 5. The duct 170 includes an air inlet 170a and an air outlet 170b.

The air inlet 170a is an opening that opens upward in the vertical direction to introduce the outside air. The air inlet 170a is formed to extend in the vehicle traveling direction between the unit case 121a and the shroud 134 of the blowing unit 130. The air outlet 170b blows out the outside air introduced via an air inlet 170a toward the sides of the air inflow surfaces 16a, 18a, and 19a of the first, second, and third exterior heat exchangers 16, 18, and 19. The air inlet 170a corresponds to the upper-side opening.

A duct 171 is disposed between the unit case 121b and the blowing unit 130. The duct 171 includes an air inlet 171a and an air outlet 171b.

The air inlet 171a is an opening that opens upward in the vertical direction to introduce the outside air. The air inlet 171a is formed to extend in the vehicle traveling direction between the unit case 121b and the shroud 134 of the blowing unit 130. The air outlet 171b blows out the outside air introduced via the air inlet 171a toward the sides of the air inflow surfaces 16a, 18a, and 19a of the first, second, and third exterior heat exchangers 16, 18, and 19. The air inlet 171a corresponds to the upper-side opening.

In the roof installation unit 12 with such a configuration, the first, second, and third exterior heat exchangers 16, 18, and 19, the covers 122 and 123, the blowing unit 130, and the like configure a cooling unit 150 that cools the refrigerant.

Next, an operation of the cooling unit 150 in the present embodiment will be described.

First, the electric fans 131, 132, and 133 respectively rotate the fans 131a, 132a, and 133a.

As the fans 131a and 132a rotate, airflows are generated to pass through the first and second exterior heat exchangers 16 and 18.

Specifically, as indicated by the arrow Ya in FIG. 3, the outside air is introduced from the front side in the vehicle traveling direction through the front side opening 122a, and then the introduced outside air is guided to the sides of the air inflow surfaces 16a and 18a of the first and second exterior heat exchangers 16 and 18 as indicated by the arrows Za in FIG. 4. The guided outside air passes through the first and second exterior heat exchangers 16 and 18.

At this time, in the first and second exterior heat exchangers 16 and 18, the refrigerant dissipates heat into the outside air. The outside air passing through the first and second exterior heat exchangers 16 and 18 flows from the air outflow surfaces 16b and 18b to the sides of the electric fans 131 and 132, respectively. The electric fans 131 and 132 draw the outside air from the air outflow surfaces 16b and 18b and blow out the outside air upward in the vertical direction.

As indicated by the arrow Ga in FIG. 5, the outside air is introduced into the duct 170 through the air inlet 170a, and the introduced outside air is guided from the air outlet 170b toward the sides of the air inflow surfaces 16a and 18a of the first and second exterior heat exchangers 16 and 18.

As indicated by the arrow Gb in FIG. 5, the outside air is introduced into the duct 171 through the air inlet 171a, and the introduced outside air is guided from the air outlet 171 b toward the sides of the air inflow surfaces 16a and 18a of the first and second exterior heat exchangers 16 and 18.

The outside air guided to the first and second exterior heat exchangers 16 and 18 in this way pass through the first and second exterior heat exchangers 16 and 18. At this time, in the first and second exterior heat exchangers 16 and 18, the refrigerant dissipates heat into the outside air. The outside air passing through the first and second exterior heat exchangers 16 and 18 flows from the air outflow surfaces 16b and 18b to the sides of the electric fans 131 and 132, respectively. The electric fans 131 and 132 draw the outside air from the air outflow surfaces 16b and 18b and blow out the outside air upward in the vertical direction, respectively.

As the fans 132a and 133a rotate, airflows are generated to pass through the second and third exterior heat exchangers 18 and 19.

Specifically, as indicated by the arrow Yd in FIG. 3, the outside air is introduced from the rear side in the vehicle traveling direction through the rear side opening 123a, and as indicated by the arrows Zb in Fig. 4, the introduced outside air is guided to the sides of the air inflow surfaces 18a and 19a of the second and third exterior heat exchangers 18 and 19. The guided outside air passes through the second and third exterior heat exchangers 18 and 19.

At this time, in the second and third exterior heat exchangers 18 and 19, the refrigerant dissipates heat into the outside air. The outside air passing through the second and third exterior heat exchangers 18 and 19 flows from the air outflow surfaces 18b and 19b to the sides of the electric fans 131 and 132, respectively. The electric fans 131 and 132 draw the outside air from the air outflow surfaces 18b and 19b and blow out the outside air upward in the vertical direction, respectively.

In the duct 170, as indicated by the arrow Gb in FIG. 5, the outside air is introduced into the duct 170 through the air inlet 171a, and the introduced outside air is guided from the air outlet 171b to the sides of the air inflow surfaces 18a and 19a of the second and third exterior heat exchangers 18 and 19.

In the duct 171, as indicated by the arrow Gb in FIG. 5, the outside air is introduced into the duct 171 through the air inlet 171a, and the introduced outside air is guided from the air outlet 171b to the sides of the air inflow surfaces 18a and 19a of the second and third exterior heat exchangers 18 and 19.

The outside air guided to the second and third exterior heat exchangers 18 and 19 in this way pass through the second and third exterior heat exchangers 18 and 19. At this time, in the second and third exterior heat exchangers 18 and 19, the refrigerant dissipates heat into the outside air. The outside air passing through the second and third exterior heat exchangers 18 and 19 flows from the air outflow surfaces 18b and 19b to the sides of the electric fans 132 and 133, respectively. The electric fans 132 and 133 draw the outside air from the air outflow surfaces 18b and 19b and blow out the outside air upward in the vertical direction, respectively.

As mentioned above, the cooling unit 150 includes the first, second, and third exterior heat exchangers 16, 18, and 19 arranged in the vehicle traveling direction, the cover 122 forming the front side opening 122a, and the blowing unit 130 configured by the electric fans 131, 132, and 133. The first, second, and third exterior heat exchangers 16, 18, and 19 are adopted in place of one exterior heat exchanger described in Patent Document 1. Thus, the dimension in the vehicle traveling direction of the first exterior heat exchanger 16 can be made smaller than the dimension in the vehicle traveling direction of the one exterior heat exchanger described in the above-mentioned Patent Document 1. The front side in the vehicle traveling direction of the first exterior heat exchanger 16 is located on the upper side in the vertical direction with respect to the rear side in the vehicle traveling direction of the first exterior heat exchanger 16, so that the first exterior heat exchanger 16 is inclined with respect to the vehicle traveling direction.

Therefore, the inclination angle of the first exterior heat exchanger 16 can be made larger than the inclination angle of one exterior heat exchanger in the case where the one exterior heat exchanger is inclined with respect to the vehicle traveling direction in the technique of the above-mentioned Patent Document 1.

Consequently, a distance L1 in the vertical direction between the roof 9 and the front side in the vehicle traveling direction of the first exterior heat exchanger 16 can be increased. Thus, as the opening area of the front side opening 122a can be enlarged, the volume of air passing through the air inflow surface 16a and the air outflow surface 16b of the first exterior heat exchanger 16 can be increased. The opening area of the front side opening 122a is an area set by a formula of (L1 x Wa) where Wa is a dimension in the vehicle width direction of the first exterior heat exchanger 16.

In the present embodiment, the front side in the vehicle traveling direction of the first exterior heat exchanger 16 can be set on the upper side in the vertical direction with respect to the lowermost portion 140b of the electric fan 131 while maintaining the minimum distance between the lowermost portion 140b of the electric fan 131 and the first exterior heat exchanger 16. The minimum distance refers to the shortest distance determined in terms of design between the electric fan 131 and the first exterior heat exchanger 16 in order to avoid the contact between the electric fan 131 and the first exterior heat exchanger 16. Therefore, the distance L1 in the vertical direction between the roof 9 and the front side in the vehicle traveling direction of the first exterior heat exchanger 16 can be further increased. Thus, as the opening area of the front side opening 122a can be further enlarged, the volume of air passing through the first exterior heat exchanger 16 can be further increased.

As mentioned above, the first, second, and third exterior heat exchangers 16, 18, and 19 are adopted in place of one exterior heat exchanger described in the above-mentioned Patent Document 1. Thus, the dimension in the vehicle traveling direction of the third exterior heat exchanger 19 can be made smaller than the dimension in the vehicle traveling direction of the one exterior heat exchanger described in the above-mentioned Patent Document 1.

The rear side in the vehicle traveling direction of the third exterior heat exchanger 19 is located on the upper side in the vertical direction with respect to the front side in the vehicle traveling direction of the third exterior heat exchanger 19. Thus, the third exterior heat exchanger 19 is inclined with respect to the vehicle traveling direction.

Therefore, the inclination angle of the third exterior heat exchanger 19 can be made larger than the inclination angle of one exterior heat exchanger in the case where the one exterior heat exchanger is inclined with respect to the vehicle traveling direction in the technique of Patent Document 1. Consequently, the distance L2 in the vertical direction between the roof 9 and the rear side in the vehicle traveling direction of the third exterior heat exchanger 19 can be increased. Thus, as the opening area of the rear side opening 123a can be enlarged, the volume of air passing through the air inflow surface 19a and the air outflow surface 19b of the third exterior heat exchanger 19 can be increased. The opening area of the rear side opening 123a is an area set by a formula of (L2 x Wb) where Wb is a dimension in the vehicle width direction of the third exterior heat exchanger 19.

In the present embodiment, the rear side in the vehicle traveling direction of the third exterior heat exchanger 19 can be set on the upper side in the vertical direction with respect to the lowermost portion 141b of the electric fan 133 while maintaining the minimum distance between the lowermost portion 141b of the electric fan 133 and the third exterior heat exchanger 19. The minimum distance refers to the shortest distance determined in terms of design between the electric fan 133 and the third exterior heat exchanger 19 in order to avoid the contact between the electric fan 133 and the third exterior heat exchanger 19. Therefore, the distance L2 in the vertical direction between the roof 9 and the rear side in the vehicle traveling direction of the third exterior heat exchanger 19 can be further increased. Thus, as the opening area of the rear side opening 123a can be further enlarged, the volume of air passing through the third exterior heat exchanger 19 can also be further increased.

With the above configuration, the roof installation unit 12 increases the volume of air passing through the first and third exterior heat exchangers 16 and 19.

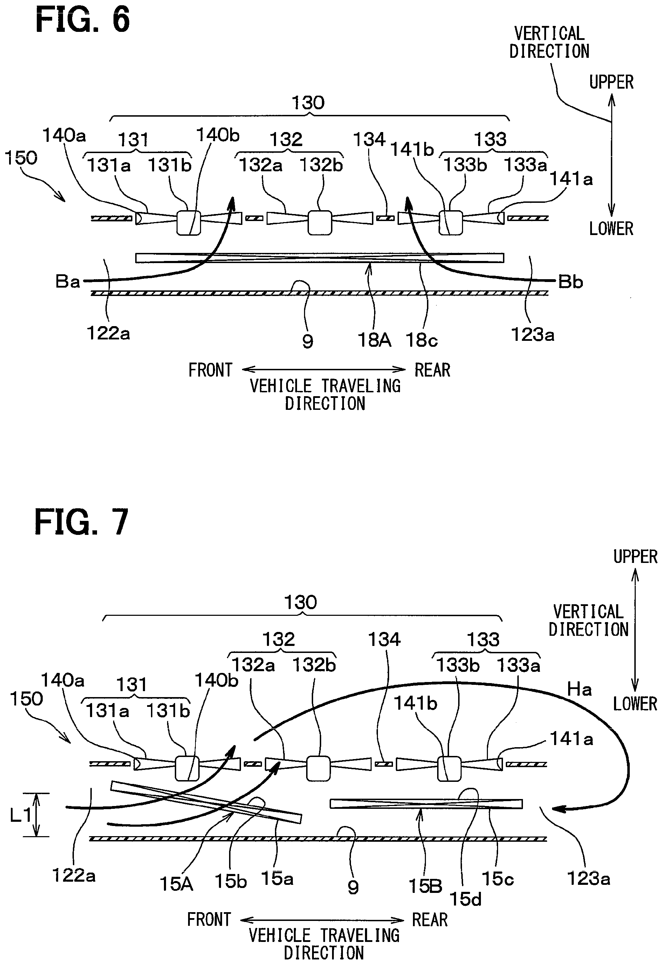

Here, as shown in FIG. 6, in a case where an exterior heat exchanger 18A, which replaces the first, second, and third exterior heat exchangers 16, 18, and 19, is arranged in parallel with the vehicle traveling direction, the distribution of the speed of the air passing through the exterior heat exchanger becomes uneven due to the ventilation resistances generated when the outside air taken in from the openings 122a and 123a passes through the exterior heat exchanger 18A.

In contrast, in the present embodiment, the first and third exterior heat exchangers 16 and 19 are inclined, respectively, as mentioned above. Thus, the corners of airflow paths, though which the air passes through the first and third exterior heat exchangers 16 and 19, become moderate. With this configuration, the uneven distribution of the air passing through the first and third exterior heat exchangers 16 and 19 can be reduced.

Together with this, the speed of the outside air can be ensured to make the air pass through the ends of the first and third exterior heat exchangers 16 and 19, thereby improving the efficiency of the heat exchange in the first and third exterior heat exchangers 16 and 19.

In particular, in the present embodiment, three independent heat exchangers, namely, the first, second, and third exterior heat exchangers 16, 18, and 19 can be provided to increase the inclination angles of the first and third exterior heat exchangers 16 and 19. Thus, the volume of air passing through the first and third exterior heat exchangers 16 and 19 can be increased.

In the present embodiment, the first exterior heat exchanger 16 includes first and second inlet side tank portions 163a and 163b, and first and second outlet side tank portions 164a and 164b. The first inlet side tank portion 163a distributes the refrigerant to the plurality of first refrigerant tubes 161. The first outlet side tank portion 164a collects the refrigerants from the plurality of first refrigerant tubes 161. The second inlet side tank portion 163b distributes the refrigerant to the plurality of second refrigerant tubes 162. The second outlet side tank portion 164b collects the refrigerants from the plurality of second refrigerant tubes 162.

Therefore, the uneven distribution of the amount or flow speed of the refrigerant flowing through the plurality of first refrigerant tubes 161 and second refrigerant tubes 162 can be reduced, as compared to the case in which one inlet side tank portion distributes the refrigerant to the plurality of first refrigerant tubes 161 and second refrigerant tubes 162, and one outlet tank portion collects the refrigerants from the plurality of first refrigerant tubes 161 and second refrigerant tubes 162.

Like the third exterior heat exchanger 19, the first exterior heat exchanger 16 includes first and second inlet side tank portions, and first and second outlet side tank portions. Therefore, the third exterior heat exchanger 19 can also obtain the same effects as the first exterior heat exchanger 16.

### (Second Embodiment)

In the above-mentioned first embodiment, an example has been described in which the first exterior heat exchanger 16 on the front side in the vehicle traveling direction is disposed while being inclined, and the third exterior heat exchanger 19 on the rear side in the vehicle traveling direction is disposed while being inclined. Meanwhile, the second embodiment will describe an example in which only the exterior heat exchanger on the front side in the vehicle traveling direction is disposed while being inclined.

FIG. 7 is a schematic diagram of an inside of the cooling unit 150 in the present embodiment, as viewed from the vehicle width direction. In FIG. 7, the same reference characters as those in FIG. 4 indicate the same elements, and a description thereof will be omitted.

The cooling unit 150 in the present embodiment includes a first exterior heat exchanger 15A and a second exterior heat exchanger 15B in place of the first, second, and third exterior heat exchangers 16, 18, and 19.

The first and second exterior heat exchangers 15A and 15B are formed in the same manner as the first, second, and third exterior heat exchangers 16, 18, and 19, and have air inflow surfaces 15a and 15c and air outflow surfaces 15b and 15d.

The first exterior heat exchanger 15A is disposed on the front side in the vehicle traveling direction with respect to the second exterior heat exchanger 15B. That is, the first exterior heat exchanger 15A is located on the foremost side in the vehicle traveling direction among the first and second exterior heat exchangers 15A and 15B. The second exterior heat exchanger 15B is located on the rearmost side in the vehicle traveling direction among the first and second exterior heat exchangers 15A and 15B. In the first exterior heat exchanger 15A, the air inflow surface 15a is disposed on the lower side in the vertical direction with respect to the air outflow surface 15b.

The front side in the vehicle traveling direction of the first exterior heat exchanger 15A is located on the upper side in the vertical direction with respect to the rear side in the vehicle traveling direction of the first exterior heat exchanger 15A. With this configuration, the first exterior heat exchanger 15A is inclined with respect to the vehicle traveling direction. Thus, the air inflow surface 15a and the air outflow surface 15b are inclined with respect to the vehicle traveling direction.

The front side in the vehicle traveling direction of the second exterior heat exchanger 15B is located at the same height in the vertical direction as the rear side in the vehicle traveling direction of the second exterior heat exchanger 15B. The second exterior heat exchanger 15B is in parallel with the vehicle traveling direction.

In the second exterior heat exchanger 15B, the air inflow surface 15c is disposed on the lower side in the vertical direction with respect to the air outflow surface 15d. The air inflow surface 15c and the air outflow surface 15d are in parallel with the vehicle traveling direction.

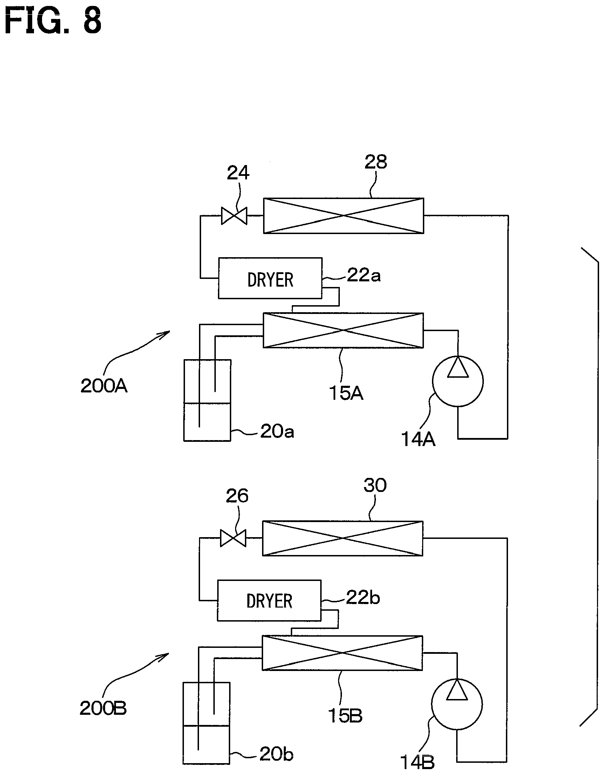

In the present embodiment, as shown in FIG. 8, the first exterior heat exchanger 15A, together with a compressor 14A, the receiver 20, the dryer 22, the first decompression device 24, and the first evaporator 28, configures a vapor compression refrigeration cycle device 200A.

The second exterior heat exchanger 15B, together with a compressor 14B, the receiver 20, the dryer 22, the second decompression device 26, and the second evaporator 30, configures a vapor compression refrigeration cycle device 200B.

Thus, the first and second exterior heat exchangers 15A and 15B configure the refrigeration cycle devices 200A and 200B, which are independent of each other, respectively.

Although described above, according to the present embodiment, the first exterior heat exchanger 15A and the second exterior heat exchanger 15B are adopted in place of one exterior heat exchanger described in the above-mentioned Patent Document 1. Thus, the dimension in the vehicle traveling direction of the first exterior heat exchanger 15A can be made smaller than the dimension in the vehicle traveling direction of the one exterior heat exchanger described in the above-mentioned Patent Document 1. The front side in the vehicle traveling direction of the first exterior heat exchanger 15A is located on the upper side in the vertical direction with respect to the rear side in the vehicle traveling direction of the first exterior heat exchanger 15A, and the first exterior heat exchanger 15A is inclined with respect to the vehicle traveling direction. Therefore, the inclination angle of the first exterior heat exchanger 15A can be made larger than the inclination angle of one exterior heat exchanger in the case where the one exterior heat exchanger is inclined with respect to the vehicle traveling direction in the technique of Patent Document 1.

Consequently, like the first exterior heat exchanger 16 in the above-mentioned first embodiment, a distance L1 in the vertical direction between the roof 9 and the front side in the vehicle traveling direction of the first exterior heat exchanger 15A can be increased. Thus, as the opening area of the front side opening 122a can be enlarged, the volume of air passing through the air inflow surface 15a and the air outflow surface 15b of the first exterior heat exchanger 15A can be increased.

In the present embodiment, the front side in the vehicle traveling direction of the first exterior heat exchanger 16 (for example, the front end in the vehicle traveling direction) can be located on the upper side in the vertical direction with respect to the lowermost portion 140b of the electric fan 131 while maintaining the minimum distance between the lowermost portion 140b of the electric fan 131 and the first exterior heat exchanger 15A. The minimum distance refers to the shortest distance determined in terms of design between the electric fan 131 and the first exterior heat exchanger 15A in order to avoid the contact between the electric fan 131 and the first exterior heat exchanger 15A. Consequently, the distance L1 in the vertical direction between the roof 9 and the front side in the vehicle traveling direction of the first exterior heat exchanger 15A can be increased. For this reason, the opening area of the front side opening 122a can be made large. Therefore, the volume of air passing through the air inflow surface 15a and the air outflow surface 15b of the first exterior heat exchanger 15A can be increased.

In the present embodiment, only the first exterior heat exchanger 15A in the first and second exterior heat exchangers 15A and 15B is inclined. Thus, the second exterior heat exchanger 15B reduces its cooling capacity because the volume of air passing through the second exterior heat exchanger 15B is less than that through the first exterior heat exchanger 15A. However, the second exterior heat exchanger 15B can suppress the outside air, discharged from the electric fan 131, from coming around behind and being guided to the rear side opening 123a as indicated by the arrow Ha.

In the present embodiment, the refrigeration cycle devices 200A and 200B are the refrigeration cycles which are independent of each other. Thus, when the refrigeration cycle devices 200A and 200B require different refrigeration capacities, only the first exterior heat exchanger 15A in the first and second exterior heat exchangers 15A and 15B is inclined depending on the balance of the refrigeration capacity between the refrigeration cycle devices 200A and 200B, so that the refrigeration cycle devices 200A and 200B can be operated appropriately.

### (Other Embodiments)

(1) While the above-mentioned first and second embodiments have described an example in which the roof installation unit 12 is mounted on the roof 9 of the vehicle, alternatively, the roof installation unit 12 may be mounted on the roof 9 of trains, electric railcars, and the like.
(2) While the above-mentioned first and second embodiments have described an example in which the refrigeration cycle device 10 (200A, 200B) is configured as the vapor compression refrigeration cycle, the refrigeration cycle device 10 (200A, 200B) is not limited thereto and may be configured as any refrigeration cycle other than the vapor compression refrigeration cycle.
(3) While the above-mentioned first and second embodiments have described an example in which the vehicle air conditioner 100 is mounted on the vehicle, alternatively, the vehicle air conditioner 100 may be mounted on trains, electric railcars, and the like.
(4) The above-mentioned first and second embodiments have described an example of using three exterior heat exchangers 16 to 19 or two exterior heat exchangers 15A and 15B, but are not limited thereto. Alternatively, four or more exterior heat exchangers may be used.
(5) While the above-mentioned first and second embodiments have described an example of using three electric fans 131, 132, and 133, one electric fan, two electric fans, or four electric fans may be used.
(6) The above-mentioned first and second embodiments have described an example in which the first to third exterior heat exchangers 16 to 19 are arranged in the center layout, and the above-mentioned second embodiment has described an example in which the first and second exterior heat exchangers 15A and 15B are also arranged in the center layout. Alternatively, the following arrangement may be used.

That is, the first to third exterior heat exchangers 16 to 19 or the first and second exterior heat exchangers 15A and 15B may be arranged in any layout other than the center layout.
(7) While the above-mentioned first and second embodiments have described an example in which an axial fan is used as the fans 131a, 132a, and 133a, the fans are not limited thereto. Alternatively, any fan other than the axial fan may be used as the fans 131a, 132a, and 133a.
(8) While the above-mentioned first and second embodiments have described an example in which the vehicle air conditioner 100 is provided with the duct 170 or 171, alternatively, the duct 170 or 171 may not be provided in the vehicle air conditioner 100.
(9) The above-mentioned second embodiment has described an example in which the first and second exterior heat exchangers 15A and 15B configure the refrigeration cycle devices 200Aand 200B, which are independent of each other, respectively. Alternatively, the first and second exterior heat exchangers 15A and 15B may configure one refrigeration cycle device.

For example, in one refrigeration cycle device, the first and second exterior heat exchangers 15A and 15B may be connected in series.
(10) The above-mentioned first and second embodiments have described an example in which the tube stacking direction of the exterior heat exchangers 16 to 19 (15A and 15B) is aligned with the vehicle width direction. Alternatively, the tube stacking direction of the exterior heat exchangers 16 to 19 (15A, 15B) may intersect the vehicle width direction.
(11) The above-mentioned first and second embodiments have described an example in which in the exterior heat exchangers 16 to 19 (15A and 15B), the inlet side header tank 163 is disposed on the front side in the vehicle traveling direction with respect to the outlet side header tank 164. Alternatively, the inlet side header tank 163 may be disposed on the rear side in the vehicle traveling direction with respect to the outlet side header tank 164.
(12) The above-mentioned first and second embodiments have described an example in which two inlet side tank portions and two outlet side tank portions are provided in each of the first, second, and third exterior heat exchangers 16, 18, and 19. Alternatively, the following arrangement may be used.

Each of the first, second, and third exterior heat exchangers 16, 18, and 19 may employ three or more inlet side tank portions and three or more outlet side tank portions.
(13) While the above-mentioned first and second embodiments have described an example in which the front side in the vehicle traveling direction of the first exterior heat exchanger 16(15A) is arranged on the upper side in the vertical direction with respect to the lowermost portion 140b of the electric motor 131b, the exterior heat exchanger is not limited thereto. Alternatively, the front side in the vehicle traveling direction of the first exterior heat exchanger 16(15A) may be arranged on the lower side in the vertical direction with respect to the lowermost portion 140b of the electric motor 131b.
(14) While the above-mentioned first and second embodiments have described an example in which the rear side in the vehicle traveling direction of the third exterior heat exchanger 19 is arranged on the upper side in the vertical direction with respect to the lowermost portion 141b of the electric motor 133b, the exterior heat exchanger is not limited thereto. Alternatively, the rear side in the vehicle traveling direction of the third exterior heat exchanger 19 may be arranged on the lower side in the vertical direction with respect to the lowermost portion 141b of the electric motor 133b.
(15) The present disclosure is not intended to be limited to the above-mentioned embodiments, and various modifications and changes can be made to these embodiments as appropriate. The above-mentioned respective embodiments are not irrelevant to each other, and any appropriate combination between them may be implemented except when their combinations seem obviously impossible. In each of the above-mentioned embodiments, it is apparent that the elements configuring the embodiments are not necessarily essential, particularly unless otherwise specified to be essential, except when obviously considered to be essential in principle, and the like. Even when referring to a specific number about a component, including the number, a numerical value, an amount, a range, and the like in the above-mentioned respective embodiments, the component in the embodiments should not be limited to the specific number particularly unless otherwise specified to be essential, except when obviously limited to the specific number in principle, and the like. When referring to the shape, positional relationship, or the like of components and the like in each of the above-mentioned embodiments, the component should not be limited to the shape, positional relationship, or the like unless otherwise specified, and except when limited to the specific shape, positional relationship, or the like in principle.

### (Summary)

According to a first aspect described in a part of all of the above-mentioned first and second embodiments and other embodiments, a roof installation unit that is to be disposed in a roof of a vehicle includes a plurality of exterior heat exchangers, a front-side opening formation portion, and a blower. The front-side opening formation portion is disposed on a front side in the vehicle traveling direction with respect to the plurality of exterior heat exchangers, and forms a front side opening through which the outside air is taken in from the front side in the vehicle traveling direction. The blower is disposed on an upper side in a vertical direction of a foremost exterior heat exchanger located on a foremost side in the vehicle traveling direction among the plurality of exterior heat exchangers. The blower generates a flow of outside air such that the outside air taken in via the front side opening passes through the foremost exterior heat exchanger, and the outside air having passed is drawn into the blower. A front side in the vehicle traveling direction of the foremost exterior heat exchanger is located on an upper side in the vertical direction with respect to a rear side in the vehicle traveling direction of the exterior heat exchanger. The foremost exterior heat exchanger is inclined with respect to the vehicle traveling direction.

According to a second aspect, a lowermost portion of the first electric motor located on the lowest side in the vertical direction is located on a lower side in the vertical direction with respect to a lowermost portion of the first fan located on a lowest side in the vertical direction, and a front side in the vehicle traveling direction of the foremost exterior heat exchanger is located on an upper side in the vertical direction with respect to the lowermost portion of the first electric motor.

Therefore, the distance (L1) in the vertical direction between the roof of the vehicle and the front side in the vehicle traveling direction of the foremost exterior heat exchanger can be further increased. Thus, as the opening area of the front side opening can be further enlarged, the volume of air passing through the foremost exterior heat exchanger can be further increased.

According to a third aspect, the roof installation unit includes: a rear-side opening formation portion disposed on a rear side in the vehicle traveling direction with respect to the plurality of exterior heat exchangers, the rear-side opening formation portion being configured to form a rear side opening through which the outside air is taken in from the rear side in the vehicle traveling direction; and
a second blower disposed on the upper side in the vertical direction with respect to a rearmost exterior heat exchanger located on a rearmost side in the vehicle traveling direction among the plurality of exterior heat exchangers, the second blower being configured to generate a flow of outside air such that the outside air taken in via the rear side opening passes through the rearmost exterior heat exchanger, and the outside air having passed is drawn into the second blower.

Here, a rear side in the vehicle traveling direction of the rearmost exterior heat exchanger is located on an upper side in the vertical direction with respect to a front side in the vehicle traveling direction of the rearmost exterior heat exchanger, so that the rearmost exterior heat exchanger is inclined with respect to the vehicle traveling direction.

With this configuration, according to the third aspect, the plurality of exterior heat exchangers respectively arranged in the vehicle traveling direction are adopted in place of one exterior heat exchanger described in the above-mentioned Patent Document 1. Thus, the dimension in the vehicle traveling direction of the rearmost exterior heat exchanger can be made smaller than the dimension in the vehicle traveling direction of the one exterior heat exchanger described in the above-mentioned Patent Document 1. Consequently, the inclination angle of the rearmost exterior heat exchanger can be made larger than the inclination angle of one exterior heat exchanger in the case where the one exterior heat exchanger is inclined with respect to the vehicle traveling direction in the technique of Patent Document 1. Therefore, the distance (L2) in the vertical direction between the roof of the vehicle and the rear side in the vehicle traveling direction of the rearmost exterior heat exchanger can be further increased. Thus, as the opening area of the rear side opening can be further enlarged, the volume of air passing through the rearmost exterior heat exchanger can be increased.

According to a fourth aspect, the second blower includes a second fan having an axis formed to extend in the vertical direction and configured to rotate about the axis to generate a flow of the outside air that passes through the rearmost exterior heat exchanger, and a second electric motor disposed on a side of the axis of the second fan and configured to rotate the second fan.

A lowermost portion of the second electric motor located on the lowest side in the vertical direction is located on a lower side in the vertical direction with respect to a lowermost portion of the second fan located on the lowest side in the vertical direction, and
a rear side in the vehicle traveling direction of the rearmost exterior heat exchanger is located on an upper side in the vertical direction with respect to the lowermost portion of the second electric motor.

Therefore, the distance (L2) in the vertical direction between the roof of the vehicle and the rear side in the vehicle traveling direction of the rearmost exterior heat exchanger can be further increased. Thus, as the opening area of the rear side opening can be further enlarged, the volume of air passing through the rearmost exterior heat exchanger can be further increased.

According to a fifth aspect, the roof installation unit includes a duct disposed in a vehicle width direction with respect to the first blower and the second blower, the duct having an upper side opening that is open toward an upper side in the vertical direction and through which outside air is taken in from the upper side in the vertical direction, the duct being configured to guide the outside air taken in through the upper side opening to an air inflow portion of the foremost exterior heat exchanger in the vehicle traveling direction and to an air inflow portion of the rearmost exterior heat exchanger in the vehicle traveling direction.

Thus, the volume of air passing through the foremost exterior heat exchanger and the rearmost exterior heat exchanger in the vehicle traveling direction can be further increased.

According to a sixth aspect, the roof installation unit includes a rear-side opening formation portion disposed on a rear side in the vehicle traveling direction with respect to the plurality of exterior heat exchangers, the rear-side opening formation portion being configured to form a rear side opening through which the outside air is taken in from the rear side in the vehicle traveling direction. Further, the roof installation unit includes a second blower disposed on the upper side in the vertical direction with respect to a rearmost exterior heat exchanger located on a rearmost side in the vehicle traveling direction among the plurality of exterior heat exchangers. The second blower generates a flow of outside air such that the outside air taken in via the rear side opening passes through the rearmost exterior heat exchanger, and the outside air having passed is drawn into the second blower. The blower is a first blower. The rearmost exterior heat exchanger is disposed in parallel with the vehicle traveling direction. Thus, the outside air discharged from the first blower can be suppressed from coming around behind and being introduced into the rear side opening.

According to a seventh aspect, in the roof installation unit, the foremost exterior heat exchanger includes a plurality of refrigerant tubes that are formed to extend in the vehicle traveling direction and arranged in the vehicle width direction and through which the refrigerant flows. The plurality of refrigerant tubes is inclined with respect to the vehicle traveling direction.

The foremost exterior heat exchanger includes a plurality of inlet side tanks (163a and 163b shown in FIG. 2) and a plurality of outlet side tanks (164a and 164b shown in FIG. 2). The plurality of inlet side tanks and the plurality of outlet side tanks are paired. Each of the inlet side tanks distributes the refrigerant to corresponding plurality of refrigerant tubes among the plurality of refrigerant tubes, and each of the outlet side tanks collects the refrigerants flowing from the corresponding plurality of refrigerant tanks. That is, the foremost exterior heat exchanger is a multi-flow heat exchanger.

Therefore, the uneven distribution of the amount or flow speed of the refrigerant flowing through the plurality of refrigerant tubes can be reduced in the foremost exterior heat exchanger, as compared to the case in which one inlet side tank portion distributes the refrigerant to the plurality of refrigerant tubes, and one outlet side tank portion collects the refrigerants from the plurality of refrigerant tubes.

According to an eighth aspect, in the roof installation unit, the rearmost exterior heat exchanger includes a plurality of refrigerant tubes that are formed to extend in the vehicle traveling direction and arranged in the vehicle width direction and through which the refrigerant flows. The plurality of refrigerant tubes is inclined with respect to the vehicle traveling direction.

The rearmost exterior heat exchanger includes a plurality of inlet side tanks and a plurality of outlet side tanks. The plurality of inlet side tanks and the plurality of outlet side tanks are paired.

Each of the inlet side tanks distributes the refrigerant to corresponding plurality of refrigerant tubes among the plurality of refrigerant tubes, and each of the outlet side tanks collects the refrigerants from the corresponding plurality of refrigerant tanks. That is, the rearmost exterior heat exchanger is a multi-flow heat exchanger.

Therefore, the uneven distribution of the amount or flow speed of the refrigerant flowing through the plurality of refrigerant tubes can be reduced in the rearmost exterior heat exchanger, as compared to the case in which one inlet side tank portion distributes the refrigerant to the plurality of refrigerant tubes, and one outlet side tank portion collects the refrigerants from the plurality of refrigerant tubes.

## Claims

1. A roof installation unit that is to be disposed in a roof of a vehicle, the roof installation unit comprising:
a plurality of exterior heat exchangers (16, 18, 19, 15A, 15B) that configures a refrigeration cycle in which a refrigerant circulates, the exterior heat exchangers being respectively arranged in a vehicle traveling direction, each of the exterior heat exchangers being configured to cool the refrigerant by heat exchange between the refrigerant and outside air;
a front-side opening formation portion (122) disposed on a front side in the vehicle traveling direction with respect to the plurality of exterior heat exchangers, the front-side opening formation portion being configured to form a front side opening (122a) through which the outside air is taken in from the front side in the vehicle traveling direction; and
a blower (131) disposed on an upper side in a vertical direction of a foremost exterior heat exchanger (15A, 16) located on a foremost side in the vehicle traveling direction among the plurality of exterior heat exchangers, wherein
the blower is configured to generate a flow of outside air such that the outside air taken in via the front side opening passes through the foremost exterior heat exchanger, and the outside air having passed through the foremost exterior heat exchanger is drawn into the blower, and
a front side in the vehicle traveling direction of the foremost exterior heat exchanger is located on an upper side in the vertical direction with respect to a rear side in the vehicle traveling direction of the foremost exterior heat exchanger, and the foremost exterior heat exchanger is inclined with respect to the vehicle traveling direction.

2. The roof installation unit according to claim 1, wherein
the blower includes a first fan (131a) having an axis extending in the vertical direction and configured to rotate about the axis to generate a flow of the outside air that passes through the foremost exterior heat exchanger, and a first electric motor (131b) disposed on the axis of the first fan and configured to rotate the first fan,
a lowermost portion (140b) of the first electric motor located on a lowest side in the vertical direction is located on a lower side in the vertical direction with respect to a lowermost portion (140a) of the first fan located on a lowest side in the vertical direction, and
the front side in the vehicle traveling direction of the foremost exterior heat exchanger is located on the upper side in the vertical direction with respect to the lowermost portion of the first electric motor.

3. The roof installation unit according to claim 1 or 2, wherein the blower (131) is as a first blower, the roof installation unit further comprising:
a rear-side opening formation portion (123) disposed on a rear side in the vehicle traveling direction with respect to the plurality of exterior heat exchangers, the rear-side opening formation portion being configured to form a rear side opening (123a) through which the outside air is taken in from the rear side in the vehicle traveling direction; and
a second blower (133) disposed on an upper side in the vertical direction with respect to a rearmost exterior heat exchanger (19) located on a rearmost side in the vehicle traveling direction among the plurality of exterior heat exchangers, the second blower being configured to generate a flow of outside air such that the outside air taken in via the rear side opening passes through the rearmost exterior heat exchanger, and the outside air having passed through the rearmost exterior heat exchanger is drawn into the second blower, wherein
a rear side in the vehicle traveling direction of the rearmost exterior heat exchanger is located on an upper side in the vertical direction with respect to a front side in the vehicle traveling direction of the rearmost exterior heat exchanger, so that the rearmost exterior heat exchanger is inclined with respect to the vehicle traveling direction.

4. The roof installation unit according to claim 3, wherein
the second blower includes a second fan (133a) having an axis extending in the vertical direction and configured to rotate about the axis to generate a flow of the outside air that passes through the rearmost exterior heat exchanger, and a second electric motor (133b) disposed on the axis of the second fan and configured to rotate the second fan,
a lowermost portion (141b) of the second electric motor located on the lowest side in the vertical direction is located on a lower side in the vertical direction with respect to a lowermost portion (141a) of the second fan located on the lowest side in the vertical direction, and
a rear side in the vehicle traveling direction of the rearmost exterior heat exchanger is located on an upper side in the vertical direction with respect to the lowermost portion of the second electric motor.

5. The roof installation unit according to claim 3 or 4, further comprising:
a duct (170, 171) disposed in a vehicle width direction with respect to the first blower and the second blower, the duct having an upper side opening (170a, 171a) that is open toward an upper side in the vertical direction and through which outside air is taken in from an upper side in the vertical direction, the duct being configured to guide the outside air taken in through the upper side opening to an air inflow portion (16a) of the foremost exterior heat exchanger in the vehicle traveling direction and to an air inflow portion (19a) of the rearmost exterior heat exchanger in the vehicle traveling direction.

6. The roof installation unit according to claim 1 or 2, wherein the blower (131) is as a first blower, the roof installation unit further comprising:
a rear-side opening formation portion (123) disposed on a rear side in the vehicle traveling direction with respect to the plurality of exterior heat exchangers, the rear-side opening formation portion being configured to form a rear side opening (123a) through which the outside air is taken in from the rear side in the vehicle traveling direction; and
a second blower (133) disposed on an upper side in the vertical direction with respect to a rearmost exterior heat exchanger (15B) located on a rearmost side in the vehicle traveling direction among the plurality of exterior heat exchangers, wherein
the second blower generates a flow of outside air such that the outside air taken in via the rear side opening passes through the rearmost exterior heat exchanger, and the outside air having passed through the rearmost exterior heat exchanger is drawn into the second blower, and
the rearmost exterior heat exchanger is disposed in parallel with the vehicle traveling direction.
